# EUROPÄISCHE PATENTSCHRIFT

(11) **EP 1 207 062 B1**
(45) Veröffentlichungstag und Bekanntmachung des Hinweises auf die Patenterteilung: **11.08.2010**
(21) Anmeldenummer: 01126480.1
(22) Anmeldetag: 09.11.2001
(51) Int. Cl.: B60H 1/34

(54) **Luftaustritt für Belüftungsanlagen**
Air outlet for a ventilation system
Sorte d'air pour une installation de ventilation

(30) Priorität: 20.11.2000 DE 10057421
(43) Veröffentlichungstag der Anmeldung: 22.05.2002
(73) Patentinhaber: TRW Automotive Electronics & Components GmbH, 78315 Radolfzell (DE)
(72) Erfinder: Demerath, Michael, 66909 Hüffler (DE); Klein, Norbert, Dr., 67685 Weilerbach (DE)
(74) Vertreter: Prinz & Partner

(56) Entgegenhaltungen:
- DE-A- 2 012 000
- DE-A- 4 011 085
- DE-C- 19 701 499

## Beschreibung

Die Erfindung betrifft einen Luftaustritt für Belüftungsanlagen in Fahrzeugen nach dem Oberbegriff des Anspruchs 1.

Derartige Luftaustritte werden in Fahrzeugen eingesetzt, um eine steuerbare Belüftung des Fahrzeuginnenraumes zu ermöglichen. Die Richtung und die Stärke des Luftstroms sind gewöhnlich vom Fahrzeuginsassen über Bedienelemente manuell einstellbar.

Eine Einstellung der Belüftung mit nur einem Bedienelement ist z.B. aus der EP 0 888 916 A2 bekannt. Hier wird mittels eines Drehrades gleichzeitig eine Luftdurchflußklappe geöffnet und die Stellung von Lamellen, die den Luftstrom in das Innere des Fahrzeugs lenken, beeinflußt. Der Volumenstrom ist nicht unabhängig von der Richtung, in der die Luft in das Fahrzeuginnere eintritt, einstellbar.

Aus der gattungsbildenden DE 2 012 000 A ist eine Belüftungsvorrichtung mit einem Verstellknopf, Horizontal- und Vertikallamellen und einer Luftdurchflußklappe bekannt. Durch Drehen des Verstellknopfes wird eine Drehung der Luftdurchflußklappe erreicht, durch seitliches, bogenförmiges Bewegen einer Spindel werden die Vertikallamellen verstellt, und durch eine Schwenkbewegung des Verstellknopfes werden die Horizontallamellen verstellt.

Durch die Erfindung wird ein alternativer Luftaustritt geschaffen, bei dem mit nur einem Bedienelement sowohl der Volumenstrom als auch die Richtung des austretenden Luftstroms unabhängig voneinander eingestellt werden können.

Der erfindungsgemäße Luftaustritt weist die Merkmale des Anspruchs 1 auf. Eine Translationsbewegung und eine Drehbewegung eines Bedienelementes lassen sich unabhängig voneinander mit einer Hand durchführen, was die Ergonomie erhöht, und sind einfach in eine Bewegung verschiedener Bauteile umzusetzen. Während mit der Translationsbewegung des Bedienelementes z.B. Lamellen, die die Richtung des Luftstromes beeinflussen, bewegt werden können, läßt sich über die in eine Verstellbewegung umgesetzte Drehbewegung des Bedienelementes der Öffnungsgrad einer Luftklappe zur Regulierung des Volumenstromes verändern.

In einer bevorzugten Ausführungsform der Erfindung wird die Linearbewegung über einen an der Luftklappe angeschlossenen Hebel in eine Schwenkbewegung der Luftklappe umgesetzt. Auf diese Weise läßt sich eine einfache Umsetzung der Drehbewegung in eine Öffnungsbewegung einer Luftklappe erreichen.

In einer bevorzugten Ausführungsform der Erfindung umfaßt das Stellgetriebe eine Gewindespindel und eine mit dieser in Eingriff stehende Schraubmutter, wobei die Schraubmutter nicht drehbar und axial unverschiebbar gehaltert und die Gewindespindel gegenüber der Schraubmutter drehbar und axial verschiebbar angeordnet ist. Der in diesem Fall notwendige Längenausgleich entlang der Gelenkwelle wird bevorzugt dadurch erreicht, daß die Gewindespindel aus einem Innenteil und einem Außenteil besteht, wobei Innen- und Außenteil drehfest aber axial gegeneinander verschiebbar miteinander verbunden sind. Mit einem derartigen Mechanismus läßt sich eine Drehbewegung einfach und zuverlässig in eine Translationsbewegung umsetzen.

Vorteilhafterweise ist das Bedienelement mit einem geringen axialen Spiel an das Stellgetriebe gekoppelt, um eine begrenzte Translationsbewegung des Bedienelementes zu ermöglichen.

Weitere Merkmale und Vorteile der Erfindung ergeben sich aus den Unteransprüchen.

Die Erfindung wird nachfolgend anhand mehrerer Ausführungsbeispiele mit Bezug auf die beigefügten Zeichnungen näher beschrieben. In den Zeichnungen zeigen:
- Figur 1 eine schematische dreidimensionale Ansicht eines Teils eines erfindungsgemäßen Luftaustrittes gemäß einer ersten Ausführungsform;

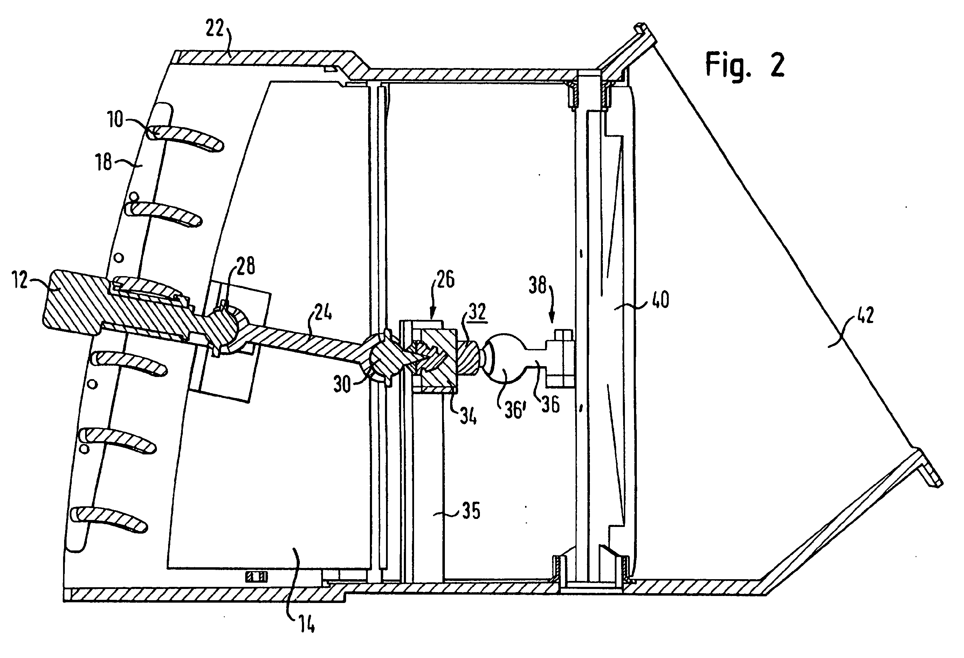

- Figur 2 einen Schnitt durch einen erfindungsgemäßen Luftaustritt gemäß einer ersten Ausführungsform;
- Figur 3 einen weiteren Schnitt durch einen erfindungsgemäßen Luftaustritt gemäß einer ersten Ausführungsform;
- Figur 4 eine Schemazeichnung eines Stellgetriebes eines erfindungsgemäßen Luftaustrittes gemäß einer zweiten Ausführungsform; und
- Figur 5 eine Schemazeichnung eines Stellgetriebes eines erfindungsgemäßen Luftaustrittes gemäß einer dritten Ausführungsform.

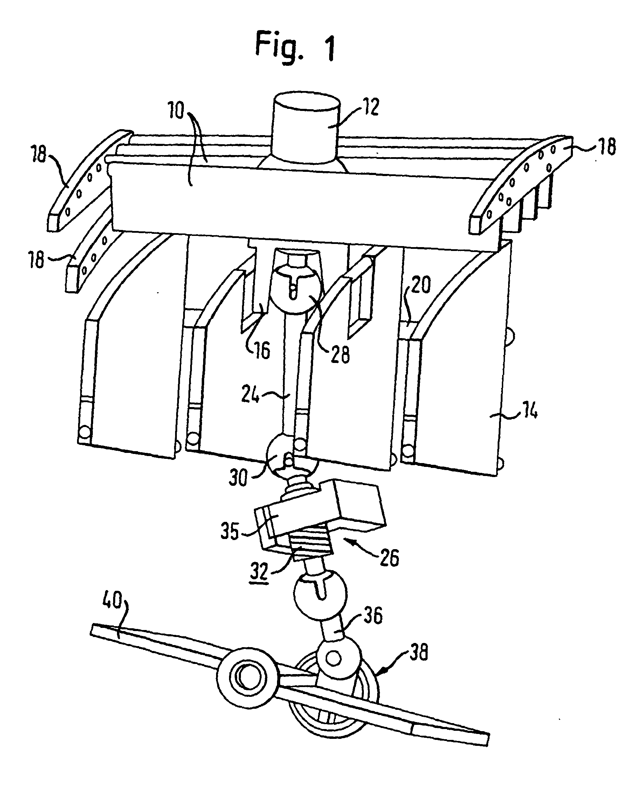

Figur 1 zeigt die Reguliereinrichtungen eines erfindungsgemäßen Luftaustrittes gemäß einer ersten Ausführungsform der Erfindung. Die Reguliereinrichtungen weisen einen ersten Satz von parallel zueinander angeordneten Luftleitlamellen 10 auf. Stromaufwärts des ersten Satzes von Luftleitlamellen 10 befindet sich ein zweiter Satz von Luftleitlamellen 14, wobei die Luftleitlamellen 14 senkrecht zu den Luftleitlamellen 10 stehen.

Auf bekannte Weise sind die Lamellen des ersten und des zweiten Satzes über Träger 18, 20 jeweils untereinander verbunden, so daß eine Bewegung einer Lamelle jeweils zu einer parallelen Bewegung aller Lamellen des jeweiligen Satzes führt. Diese Träger 18, 20 können mit einem Gehäuse 22 verbunden sein (in Figur 1 nicht gezeigt). Das Gehäuse 22 ist am Fahrzeug befestigbar.

Ein Bedienelement 12 ist mit wenigstens einer Lamelle 10 dieses ersten Satzes verbunden. In diesem Fall ist das Bedienelement als Bedienknopf ausgebildet. Der Bedienknopf 12 ist auch mit einem gabelförmigen Bauteil 16 verbunden, das in Anlage mit zwei Lamellen 14 des zweiten Satzes ist.

Der Bedienknopf 12 ist so mit der Lamelle 10 des ersten Satzes verbunden, daß er entlang der Längsrichtung dieser Lamelle verschiebbar ist, in der dazu senkrechten Richtung aber formschlüssig mit ihr gekoppelt ist. Außerdem ist der Bedienknopf 12 um seine Längsachse drehbar angeordnet.

Eine Kippbewegung des Bedienknopfes 12 führt direkt zu einer Veränderung des Winkels der Lamellen 10 des ersten Satzes, während eine Translationsbewegung des Bedienknopfes 12 über das gabelförmige Bauteil 16 auf die Lamellen 14 des zweiten Satzes übertragen wird und eine Veränderung deren Anstellwinkels bewirkt.

Außerdem ist der Bedienknopf 12 mit einer Gelenkwelle 24 verbunden, die eine Drehbewegung des Bedienknopfes 12 auf ein Stellgetriebe 26 überträgt. Die Gelenkwelle 24 ist so ausgebildet, daß der Bedienknopf 12 ein gewisses axiales Spiel aufweist, um begrenzte translatorische Ausgleichsbewegungen bei seinen Kippbewegungen durchführen zu können.

Ein erstes Gelenk 28 der Gelenkwelle 24 ist zwischen zwei Lamellen 14 des zweiten Satzes in einer Aussparung des gabelförmigen Bauteils 16 angeordnet. Ein zweites Gelenk 30 überträgt die Drehbewegung auf das Stellgetriebe 26.

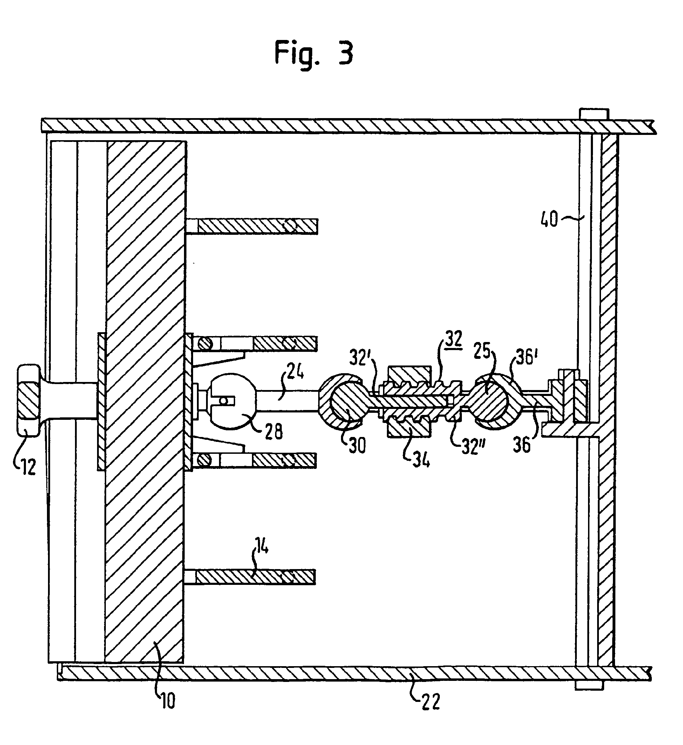

Das Stellgetriebe 26 (siehe Figur 3) umfaßt eine Schraubmutter 34 sowie eine mit dieser in Eingriff stehende Gewindespindel 32. Die Schraubmutter 34 ist fest mit einem gehäusefesten Bauteil 35 verbunden. Die Gewindespindel 32 besteht aus einem Innenteil 32' und einem Außenteil 32", die drehfest, aber axial gegeneinander verschiebbar miteinander verbunden sind. Das Innenteil 32' bildet gleichzeitig das Innenteil des Gelenks 30. Das Außenteil 32" der Gewindespindel 32 ist am der Gelenkwelle 24 abgewandten Ende 25 mit einem Gelenk 36' einer weiteren Gelenkwelle 36 so verbunden, daß das Ende 25 im Gelenk 36' frei drehbar ist. Die Gelenkwelle 36 ist über einen Hebelmechanismus 38 mit einer Luftdurchflußklappe 40 verbunden. Diese Luftdurchflußklappe 40 ist so in einem Lüftungskanal 42 angeordnet, daß sie diesen vollständig verschließen kann.

Eine Drehbewegung des Bedienknopfes 12 wird über die Gelenkwelle 24 auf das Stellgetriebe 26 übertragen, wobei eine Drehung des Gelenks 30 eine Drehung des Innenteils 32' der Gewindespindel 32 und darüber eine Drehung des Außenteils 32" bewirkt. Dadurch ergibt sich eine Translationsbewegung des Außenteils 32" gegenüber der Schraubmutter 34 in axialer Richtung. Der notwendige Längenausgleich erfolgt durch eine axiale Verschiebung des Innenteils 32' gegenüber dem Außenteil 32".

Die Translationsbewegung des Außenteils 32" wird über die Gelenkwelle 36 auf den Hebelmechanismus 38 übertragen, was eine Rotation der Luftdurchflußklappe 40 zur Folge hat.

Der notwendige Längenausgleich kann auch durch gegeneinander verschiebbare Bauteile in der Gelenkwelle 24 realisiert werden.

Die Regulierung der Richtung des Luftstroms erfolgt also durch eine Veränderung des Anstellwinkels der Lamellen 10 des ersten Satzes und/oder durch eine Verschwenkung der Lamellen 14 des zweiten Satzes mittels einer entsprechenden Bewegung des Bedienknopfes 12, die unmittelbar auf die Lamellen 10 des ersten Satzes und über das Bauteil 16 auf die Lamellen 14 des zweiten Satzes übertragen wird, während die Regulierung des Luftvolumenstroms durch eine Drehung des Bedienknopfes erfolgt, die in eine Bewegung einer Luftklappe umgesetzt wird.

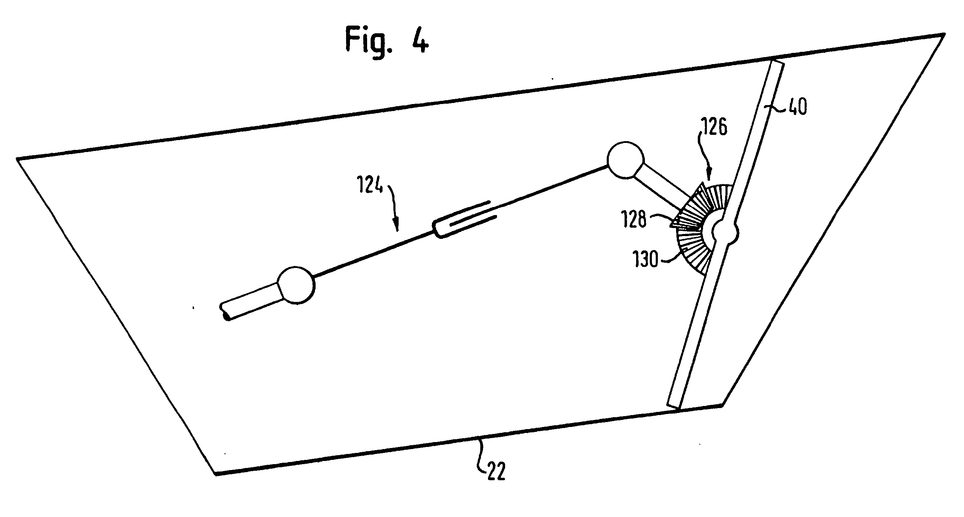

Eine zweite Ausführungsform der Erfindung ist in Figur 4 dargestellt. Diese Ausführungsform unterscheidet sich von der ersten Ausführungsform dadurch, daß die Umsetzung der Drehbewegung des Bedienelementes in eine Verstellbewegung der Luftdurchflußklappe 40 über ein Kegelradgetriebe 126 erfolgt, das über eine Kardanwelle 124 mit dem Bedienknopf verbunden ist. Die Kardanwelle 124 ist mit einem ersten Kegelrad 128 des Kegelradgetriebes 126 verbunden, das in Eingriff mit einem zweiten, an der Luftdurchflußklappe 40 angeordneten Kegelrad 130 steht. Eine Drehung des Bedienknopfes wird in eine Drehbewegung der Welle 124 umgesetzt, die wiederum eine Drehung des Kegelrades 128 bewirkt, wodurch das Kegelrad 130 in Bewegung gesetzt und der Anstellwinkel der Klappe 40 verändert wird.

Ein eventuell notwendiger Längenausgleich kann durch axial gegeneinander bewegliche Bauteile der Gelenkwelle 124 erreicht werden.

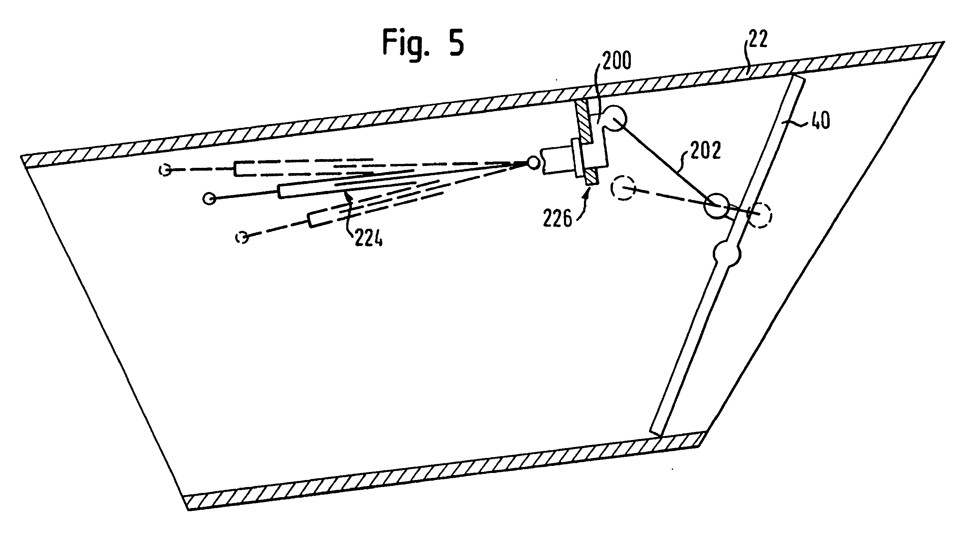

In einer dritten, in Figur 5 dargestellten Ausführungsform der Erfindung erfolgt die Umsetzung der Drehbewegung in eine Verstellung der Luftdurchflußklappe 40 durch einen mit einer Gelenkwelle 224 verbundenen Stellmechanismus 226, der einen Hebel 200 mit einem abgewinkelten Ende aufweist, der drehbar aber unverschiebbar am Gehäuse 22 befestigt und mit der Luftdurchflußklappe 40 durch ein starres Verbindungsglied 202 verbunden ist. Das Verbindungsglied 202 ist exzentrisch an der Luftdurchflußklappe 40 befestigt.

Eine Drehung des Bedienknopfes wird über die Gelenkwelle 224 auf den Hebel 200 übertragen. Der Stellmechanismus 226 ist so ausgelegt, daß sich bei einer Drehbewegung des abgewinkelten Endes des Hebels 200 die Distanz des abgewinkelten Endes des Hebels zur Befestigung des Verbindungsglieds 202 an der Klappe 40 ändert (in Figur 5 gestrichelt dargestellt). Aufgrund der exzentrischen Anordung des Verbindungsglieds 202 an der Klappe 40 bewirkt eine derartige Distanzänderung eine Änderung des Anstellwinkels der Klappe.

Die Gelenkwelle 224 kann ein gewisses Spiel senkrecht zu ihrer Längsachse aufweisen, wie dies in Figur 5 durch gestrichelte Linien angedeutet ist.

## Patentansprüche

1. Luftaustritt für Belüftungsanlagen in Fahrzeugen, mit Reguliereinrichtungen für Austrittsrichtung und Volumenstrom, wobei die Reguliereinrichtungen ein einheitliches Bedienelement (12) aufweisen, das durch Drehung um seine Achse den Volumenstrom verändert, und wobei das Bedienelement (12) durch eine Gelenkwelle (24; 124; 224) mit einem Stellgetriebe (26; 126; 226) verbunden ist, das die Drehbewegung der Gelenkwelle (24; 124; 224) in eine Verstellbewegung einer Luftklappe (40) umsetzt,
**dadurch gekennzeichnet, daß** das Bedienelement (12) durch seine Translationsverschiebung die Austrittsrichtung verändert.

2. Luftaustritt nach Anspruch 1, **dadurch gekennzeichnet, daß** das Stellgetriebe (26; 226) die Drehbewegung der Gelenkwelle (24; 224) in eine Linearbewegung umsetzt.

3. Luftaustritt nach Anspruch 2, **dadurch gekennzeichnet, daß** die Linearbewegung über einen an der Luftklappe (40) angeschlossenen Hebel (38; 200, 202) in eine Schwenkbewegung der Luftklappe (40) umgesetzt wird.

4. Luftaustritt nach Anspruch 2 oder 3, **dadurch gekennzeichnet, daß** das Stellgetriebe (26) eine Gewindespindel (32) und eine mit dieser in Eingriff stehende Schraubmutter (34) umfaßt.

5. Luftaustritt nach Anspruch 4, **dadurch gekennzeichnet, daß** die Schraubmutter (34) nicht drehbar und axial unverschiebbar gehaltert ist und die Gewindespindel (32) gegenüber der Schraubmutter drehbeweglich und axial verschiebbar angeordnet ist.

6. Luftaustritt nach Anspruch 4 oder 5, **dadurch gekennzeichnet, daß** die Gewindespindel (32) zweiteilig mit einem Innenteil (32') und einem Außenteil (32") ausgebildet ist, die drehfest und axial gegeneinander verschiebbar gekoppelt sind.

7. Luftaustritt nach einem der Ansprüche 1 bis 6, **dadurch gekennzeichnet, daß** in Strömungsrichtung aufeinanderfolgend zwei Sätze von in jedem Satz zueinander parallelen, schwenkbaren Luftleitlamellen (10, 14) angeordnet sind, wobei die Luftleitlamellen (10) des ersten Satzes senkrecht zu denen des zweiten Satzes sind, und daß das Bedienelement (12) mit wenigstens einer Luftleitlamelle (10) des austrittsseitigen ersten Satzes in Längsrichtung dieser Luftleitlamelle (10) verschiebbar, in der dazu senkrechten Richtung formschlüssig sowie um seine Achse drehbar gekoppelt ist.

8. Luftaustritt nach Anspruch 7, **dadurch gekennzeichnet, daß** das Bedienelement (12) mit einem Bauteil (16) verbunden ist, das mit zwei benachbarten Lamellen (14) des zweiten Satzes in Anlage ist, wobei eine Verschiebung des Bedienelements (12) in Längsrichtung der Luftleitlamelle (10) des ersten Satzes über das Bauteil (16) in eine Schwenkbewegung der Luftleitlamellen (14) des zweiten Satzes umgesetzt wird.

9. Luftaustritt nach Anspruch 7, **dadurch gekennzeichnet, daß** ein erstes Gelenk (28) der Gelenkwelle (24), an dem das Bedienelement (12) angeschlossen ist, zwischen zwei Luftleitlamellen (14) des zweiten Satzes angeordnet ist.

10. Luftaustritt nach den vorhergehenden Ansprüchen, **dadurch gekennzeichnet, daß** das Bedienelement (12) mit axialem Spiel an das Stellgetriebe (26) gekoppelt ist.

11. Luftaustritt nach Anspruch 1, **dadurch gekennzeichnet, daß** das Stellgetriebe (126) zwei miteinander in Eingriff stehende Kegelräder (128, 130) enthält.

12. Luftaustritt nach Anspruch 1 oder 2, **dadurch gekennzeichnet, daß** das Stellgetriebe (226) einen mit der Gelenkwelle (224) verbundenen drehbaren Hebel (200) und ein mit diesem Hebel (200) verbundenes, exzentrisch an der Luftdurchflußkappe (40) befestigtes Verbindungsglied (202) enthält.

## Claims

1. An air escape for ventilation systems in vehicles, comprising regulating means for the outflow direction and for the volume flow, the regulating means having an integrated operating element (12) that changes the volume flow through a rotation about its axis, and the operating element (12) being connected by a cardan shaft (24; 124; 224) to an actuating drive (26; 126; 226) that converts the rotational movement of the cardan shaft (24; 124; 224) into an adjustment movement of an air flap (40),
**characterized in that** the operating element (12) changes the outflow direction through its translational displacement.

2. The air escape according to claim 1, **characterized in that** the actuating drive (26; 226) converts the rotational movement of the cardan shaft (24; 224) into a linear movement.

3. The air escape according to claim 2, **characterized in that** the linear movement is converted into a swivelling movement of the air flap (40) via a lever (38; 200, 202) connected to the air flap (40).

4. The air escape according to claim 2 or 3, **characterized in that** the actuating drive (26) comprises a threaded spindle (32) and a nut (34) engaged with it.

5. The air escape according to claim 4, **characterized in that** the nut (34) is mounted such that it can not be rotated or axially displaced, and the threaded spindle (32) is arranged such that it can be rotated and axially displaced with respect to the nut.

6. The air escape according to claim 4 or 5, **characterized in that** the threaded spindle (32) is configured in two parts with an inner part (32') and an outer part (32") that are coupled for joint rotation and so as to be axially displaceable with respect to each other.

7. The air escape according to any of claims 1 to 6, **characterized in that**, in the flow direction, there are arranged two consecutive sets of swivelling air guiding vanes (10, 14) which are parallel to each other in each set, the air guiding vanes (10) of the first set being perpendicular to those of the second set, and **in that** the operating element (12) is coupled to at least one air guiding vane (10) of the outflow-side first set in such a way that it can be displaced in the longitudinal direction of this air guiding vane (10) and is coupled thereto in a form-fitting manner in the direction perpendicular thereto and so that it can be rotated about its axis.

8. The air escape according to claim 7, **characterized in that** the operating element (12) is connected to a component (16) that is in contact with two adjacent vanes (14) of the second set, a displacement of the operating element (12) in the longitudinal direction of the air guiding vane (10) of the first set being converted via the component (16) into a swivelling movement of the air guiding vanes (14) of the second set.

9. The air escape according to claim 7, **characterized in that** the cardan shaft (24) has a first joint (28) to which the operating element (12) is connected and which is arranged between two air guiding vanes (14) of the second set.

10. The air escape according to any of the preceding claims, **characterized in that** the operating element (12) is coupled to the actuating drive (26) so as to have axial play.

11. The air escape according to claim 1, **characterized in that** the actuating drive (126) comprises two conical gear wheels (128, 130) that are engaged with each other.

12. The air escape according to claim 1 or 2, **characterized in that** the actuating drive (226) comprises a rotatable lever (200) connected to the cardan shaft (224) and a connecting member (202) connected to this lever (200) and eccentrically attached to the airflow flap (40).

## Revendications

1. Sortie d'air pour installations de ventilation dans des véhicules, avec des dispositifs de régulation pour la direction de sortie et le courant volumique, les dispositifs de régulation présentant un élément de commande unitaire (12) qui modifie par une rotation autour de son axe le courant volumique, et l'élément de commande (12) étant relié par un arbre articulé (24; 124; 224) à un engrenage de réglage (26; 126; 226) qui convertit le mouvement de rotation de l'arbre articulé (24; 124; 224) en un mouvement de déplacement d'un volet d'aération (40),
**caractérisée en ce que** l'élément de commande (12) modifie la direction de sortie par son mouvement de translation.

2. Sortie d'air selon la revendication 1, **caractérisée en ce que** l'engrenage de réglage (26; 226) convertit le mouvement de rotation de l'arbre articulé (24; 224) en un mouvement linéaire.

3. Sortie d'air selon la revendication 2, **caractérisée en ce que** le mouvement linéaire est converti en un mouvement oscillant du volet d'aération (40) par un levier (38, 200, 202) raccordé au volet d'aération (40).

4. Sortie d'air selon la revendication 2 ou 3, **caractérisée en ce que** l'engrenage de réglage (26) comprend une broche filetée (32) et un écrou (34) engrenant avec celle-ci.

5. Sortie d'air selon la revendication 4, **caractérisée en ce que** l'écrou (34) est supporté de façon non rotative et non coulissante axialement et la broche filetée (32) est agencée de manière à pouvoir tourner et coulisser axialement par rapport à l'écrou.

6. Sortie d'air selon la revendication 4 ou 5, **caractérisée en ce que** la broche filetée (32) est formée de deux parties avec une partie intérieure (32') et une partie extérieure (32") qui sont couplées l'une à l'autre sans pouvoir tourner et en pouvant coulisser axialement l'une par rapport à l'autre.

7. Sortie d'air selon l'une des revendications 1 à 6, **caractérisée en ce que** deux jeux de lamelles de guidage d'air (10, 14) oscillantes, parallèles les unes aux autres dans chaque jeu, sont disposés à la suite l'un de l'autre dans le sens de l'écoulement, dans laquelle les lamelles de guidage d'air (10) du premier jeu sont perpendiculaires à celles du second jeu, et **en ce que** l'élément de commande (12) est couplé à au moins une lamelle de guidage d'air (10) du premier jeu du côté de la sortie, de façon coulissante dans le sens longitudinal de cette lamelle de guidage d'air (10), par coopération de formes dans la direction perpendiculaire à celle-ci ainsi que de façon rotative autour de son axe.

8. Sortie d'air selon la revendication 7, **caractérisée en ce que** l'élément de commande (12) est relié à un composant (16) qui est en contact avec deux lamelles voisines (14) du second jeu, dans laquelle un glissement de l'élément de commande (12) dans le sens longitudinal de la lamelle de guidage d'air (10) du premier jeu est converti par le composant (16) en un mouvement oscillant des lamelles de guidage d'air (14) du second jeu.

9. Sortie d'air selon la revendication 7, **caractérisée en ce qu'**une première articulation (28) de l'arbre articulé (24), à laquelle l'élément de commande (12) est relié, est disposée entre deux lamelles de guidage d'air (14) du second jeu.

10. Sortie d'air selon l'une des revendications précédentes, **caractérisée en ce que** l'élément de commande (12) est couplé à l'engrenage de réglage (26) avec un jeu axial.

11. Sortie d'air selon la revendication 1, **caractérisée en ce que** l'engrenage de réglage (126) comporte deux roues coniques (128, 130) en prise l'une avec l'autre.

12. Sortie d'air selon la revendication 1 ou 2, **caractérisée en ce que** l'engrenage de réglage (226) comporte un levier rotatif (200) relié à l'arbre articulé (224) et un élément d'assemblage (202) relié à ce levier (200) et fixé de façon excentrique au volet de passage d'air (40).
